# EUROPEAN PATENT APPLICATION

(11) **EP 4 800 351 A1**
(43) Date of publication of application: **02.09.2026**
(21) Application number: 25869225.0
(22) Date of filing: 19.09.2025
(51) Int. Cl.: G01B 11/26, G01B 11/03, H01M 10/42, H01M 10/0585

(54) **STACKING INSPECTION DEVICE FOR SECONDARY BATTERY AND STACKING INSPECTION METHOD USING SAME**

(30) Priority: 19.09.2024 KR 20240126843; 18.09.2025 KR 20250134821
(71) Applicant: SK On Co., Ltd., Seoul 03161 (KR)
(72) Inventor: YANG, Ji Won, Daejeon 34124 (KR)
(74) Representative: Prüfer & Partner mbB Patentanwälte · Rechtsanwälte
(86) International application number: PCT/KR2025/014658
(87) International publication number: WO 2026/063731

(57) **Abstract**

The present disclosure relates to a stacking inspection device for a secondary battery. The stacking inspection device for a secondary battery may comprise: a stack table for holding a stacked body formed by stacking sheet-type stacking members, each of which is one of a first electrode sheet, a second electrode sheet, and a separator sheet, in a stacking direction in order to form an electrode assembly; first holders disposed in a row along the first side surface of the stacked body; second holders disposed in a row along the second side surface opposite to the first side surface of the stacked body; a reference line provided along the outer circumference of the stacked body; and an imaging unit for capturing images of the reference line and side boundaries of the stacked body exposed through the first holders and the second holders. In addition, the present disclosure includes a stacking inspection method using the stacking inspection device for a secondary battery described above.

## Description

### Technical Field

The present disclosure relates to a stacking inspection apparatus for secondary batteries. More particularly, the present disclosure relates to an inspection apparatus for determining the alignment of a separator sheet and an electrode sheet that constitute an electrode assembly for secondary batteries.

Furthermore, the present disclosure includes an inspection method using the stacking inspection apparatus for secondary batteries described above.

### Background Art

Secondary batteries are rechargeable batteries capable of repeated charging and discharging cycles. With advances in information, communication, and display technologies, secondary batteries are widely used as power sources for portable electronic devices such as mobile phones and laptops. Furthermore, with the recent rise in interest in environmental issues, research is actively underway on eco-friendly vehicles, such as electric vehicles (EVs) and hybrid vehicles (HEVs), which can replace vehicles using fossil fuels, and the demand for secondary batteries as a power source for these eco-friendly vehicles is steadily increasing.

In general, an electrode assembly included in a secondary battery includes a first electrode plate, a second electrode plate, and a separator interposed between the first electrode plate and the second electrode plate. During the process of stacking the electrode plates and the separator, for example, misalignment of the electrode plates may cause degradation in the performance of secondary batteries and safety accidents.

In this regard, although various techniques for inspecting the alignment of electrode plates have been proposed, no satisfactory solution has been presented to improve the accuracy of stacking inspection.

### Document of Related Art

### Patent Document

(Patent Document) Korean Patent No. 10-2107226

### Disclosure

### Technical Problem

According to an aspect of the present disclosures, there is provided a stacking inspection apparatus for secondary batteries, the inspection apparatus being capable of determining the alignment of each stack member without affecting a stacking process of an electrode assembly for secondary batteries.

Another aspect of the present disclosure is to provide an inspection method using the stacking inspection apparatus for secondary batteries described above.

### Technical Solution

According to a first aspect of the present disclosure, there is provided a stacking inspection apparatus for secondary batteries, the stacking inspection apparatus including: a stack table holding a stack body thereon, the stack body including a sheet-type stack member that may be one of a first electrode sheet, a second electrode sheet, or a separator sheet; a first holder arranged in line along a first surface of the stack body; a second holder arranged in line along a second surface of the stack body, the second surface opposing the first surface; a reference line provided along an outer circumference of the stack body; and an imaging unit acquiring an image of a side surface boundary of the stack body, which may be exposed through the first holder and the second holder, and the reference line.

In the embodiment of the present disclosure, the stack table may be configured to move vertically in a stacking direction of the stack body.

In the embodiment of the present disclosure, the stack member arranged on the uppermost layer of the stack body may maintain a uniform distance from the imaging unit.

In the embodiment of the present disclosure, the reference line may be provided by visualizing a laser emitted by a laser generator.

In the embodiment of the present disclosure, the reference line may be formed by a planar laser light sheet oriented in the stacking direction toward the stack table.

In the embodiment of the present disclosure, the reference line may be formed from intersection points of measurement jigs that may be secured to be spaced apart from the stack table.

In the embodiment of the present disclosure, the reference line may be formed to be displayed on a display screen of the imaging unit.

In the embodiment of the present disclosure, the first holder may include a pair of first holders arranged symmetrically in a width direction of the stack body, and each first holder may have a first exposure groove extending longitudinally from the boundary of the first holder and a first exposure hole extending in the width direction in the first holder, and the second holder may include a pair of second holders arranged symmetrically in the width direction of the stack body, and each second holder may have a second exposure groove extending longitudinally from the boundary of the second holder and a second exposure hole extending in the width direction in the second holder.

In the present disclosure, the separator sheet of the stack member may be folded in a zigzag shape due to a reciprocating motion of a stacking roll.

Furthermore, the present disclosure relates to a stacking inspection method using the stacking inspection apparatus for secondary batteries, the method including: setting a reference line serving as an alignment reference of a sheet-type stack member that may be one of a first electrode sheet, a second electrode sheet, or a separator sheet that constitute a stack body; stacking the stack member on a stack table; pressurizing and supporting a side surface boundary of the stack member arranged at the uppermost layer of the stack body in a stacking direction by a holder, which includes an exposure groove and an exposure hole exposing the side surface boundary of the stack member; capturing an image of the side surface boundary of the stack member, which may be exposed through the exposure groove and the exposure hole, and the reference line; and determining the alignment of the stack member from the captured image.

In the embodiment of the present disclosure, the stack table may move downward in the opposite direction to the stacking direction at each stacking of the stack member.

In the embodiment of the present disclosure, the reference line may be provided along an outer circumference of the stack body.

In the embodiment of the present disclosure, the setting of a reference line may be provided by reference points of measurement jigs secured on the stack table and spaced apart from each other.

In the embodiment of the present disclosure, the setting of a reference line may be formed to be displayed on a display screen in advance during the capturing, in the capturing of an image of the side surface boundary of the stack member, which may be exposed through the exposure groove and the exposure hole, and the reference line.

In the pressurizing and supporting of a side surface boundary, the holder may include a first holder that may be arranged in line along a first surface of the stack body, and a second holder arranged in line along a second surface opposite to the first surface of the stack body.

The first holder may include a pair of first holders arranged symmetrically in a width direction of the stack body, and each first holder may have a first exposure groove extending longitudinally from the boundary of the first holder and a first exposure hole extending in the width direction in the first holder, and the second holder may include a pair of second holders arranged symmetrically in the width direction of the stack body, and each second holder may have a second exposure groove extending longitudinally from the boundary of the second holder and a second exposure hole extending in the width direction in the second holder.

In the embodiment of the present disclosure, the capturing of an image may be performed by capturing a side surface boundary of the stack member arranged at the uppermost layer of the stack body.

In the determining of the alignment, a gap between the side surface boundary of the stack member, which may be exposed through the exposure groove and the exposure hole, and the reference line may be used to determine whether the poor stacking of the stack member occurs.

In the present disclosure, the stacking of a stack member, the pressurizing and supporting of a side surface boundary, the capturing of an image, and the determining may be repeated in order.

The features and advantages of the present disclosure will be more apparent from the following detailed description based on the accompanying drawings.

Further, it should be noted that the terms and words used in the specification and the claims should not be construed as being limited to ordinary meanings or dictionary definitions, and should be interpreted as having a meaning and a concept that are consistent with the technical idea of the present disclosure based on the principle that an inventor may appropriately define the concept of a term to best describe the present disclosure of the inventor.

### Advantageous Effects

According to the embodiment of the present disclosure, it is possible to determine the alignment of the stack member during the stacking process of the electrode assembly for secondary batteries.

Furthermore, the present disclosure is configured to continuously and in real time conduct a comprehensive inspection of the alignment of the stack member at each stacking of the stack member, thereby improving product reliability.

Moreover, the present disclosure is configured to position the reference line at the same height as the stack member arranged at the uppermost layer of the stack body, so that high reliability of the measurement values of a gap between the stack member and the reference line can be expected.

### Description of Drawings

FIG. 1 is a schematic-perspective view showing a stacking inspection apparatus for secondary batteries according to an embodiment of the present disclosure.
FIG. 2 is a front view schematically showing the stacking inspection apparatus for secondary batteries according to the embodiment of the present disclosure.
FIG. 3a is a plan view schematically showing the stacking inspection apparatus for secondary batteries shown in FIG. 2. FIG. 3b is a view schematically showing an image captured by an imaging unit of the stacking inspection apparatus according to the embodiment of the present disclosure.
FIG. 4 is a front view schematically showing the stacking inspection apparatus for secondary batteries according to another embodiment of the present disclosure.
FIGS. 5a to 5d are summary views sequentially showing an inspection method using the stacking inspection apparatus for secondary batteries according to the present disclosure.

### Bes Mode

The terminology used to describe embodiments of the present disclosure is not intended to limit the present disclosure. It should be noted that expressions in singular may include expressions in plural unless the context clearly indicates otherwise.

In assigning reference numerals to components of the drawings, it should be noted that the same components are given the same reference numerals as much as possible even when they are shown in different drawings, and similar reference numerals are given to similar components.

The drawings may be schematic or exaggerated to illustrate embodiments. In the present document, expressions such as "has", "may have", "comprises", "may comprise", "includes", or "may include" indicate the presence of corresponding characteristics (e.g., a numerical value, function, operation, or component such as a part), and does not exclude the presence of additional characteristics.

Terms such as "one", "other", "another", "first", "second", etc. are used to distinguish one component from another, and components are not limited by the above terms.

Hereinbelow, an exemplary embodiment of the present disclosure will be described in detail with reference to accompanying drawings.

The present disclosure is configured to separately detect the alignment of each stack member, which is stacked uni-directionally in a manufacturing process of an electrode assembly for secondary batteries. Particularly, the present disclosure is configured to measure a gap between each stack member of the electrode assembly and a preset reference line and determine whether poor stacking of an electrode assembly occurs.

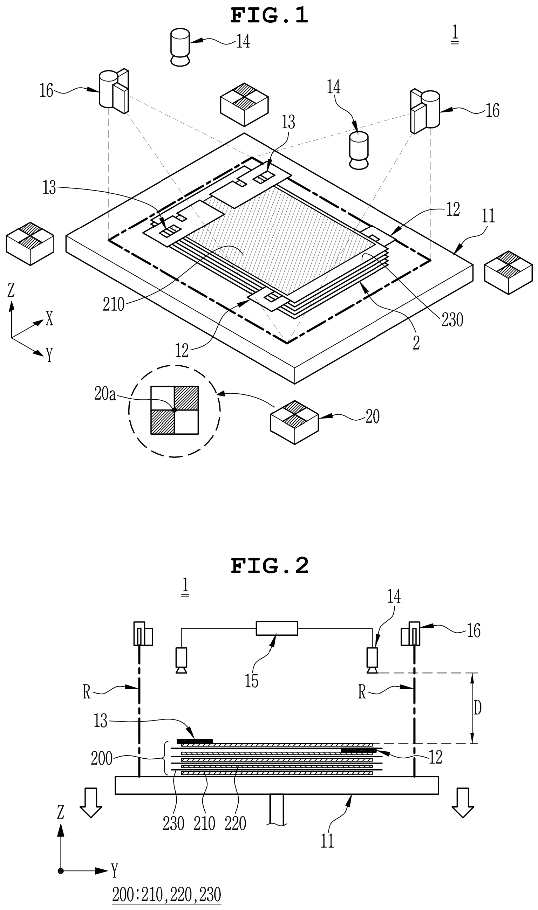

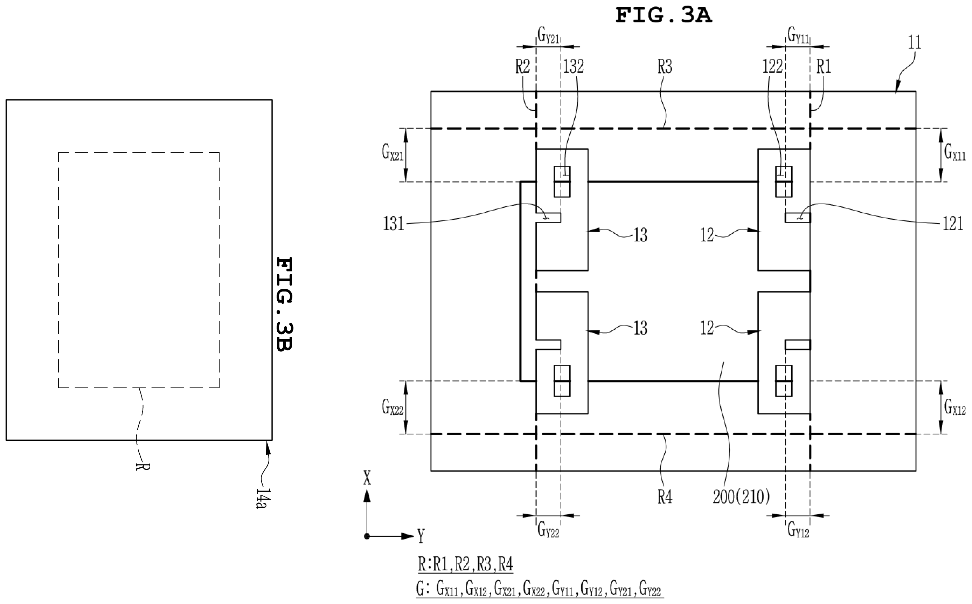

FIG. 1 is a schematic-perspective view showing a stacking inspection apparatus for secondary batteries according to an embodiment of the present disclosure. FIG. 2 is a front view schematically showing the stacking inspection apparatus for secondary batteries according to the embodiment of the present disclosure. FIG. 3a is a plan view schematically showing the stacking inspection apparatus for secondary batteries shown in FIG. 2. FIG. 3b is a view schematically showing an image captured by an imaging unit of the stacking inspection apparatus according to the embodiment of the present disclosure.

According to the embodiment of the present disclosure, the stacking inspection apparatus 1 of secondary batteries (hereinbelow, which refers to as the stacking inspection apparatus) includes: a stack table 11 holding a stack body 200, the stack body 200 being formed by stacking, in a stacking direction, a sheet-type stack member that is one of a first electrode sheet 210, a second electrode sheet 220, or a separator sheet 230; a first holder 12 arranged in line along a first surface of the stack body 200; a second holder 13 arranged in line along a second surface of the stack body 200, the second surface opposing the first surface; a reference line R (R1, R2, R3, R4) provided along the outer circumference of the stack body 200; and an imaging unit 14 capturing the reference line with a boundary of the stack body 200 exposed through the first holder 12 and the second holder 13.

With the above-described configuration, the present disclosure is configured to calculate a gap G between each stack member boundary of the stack body 200, which is exposed through an exposure groove 121, 131 and an exposure hole 122, 132 of the holder 12, 13, and the reference line R and to determine the alignment of each stack member of the stack body 200. At this point, a sheet-type constituting member of the stack body 200 is commonly called a stack member (no reference numeral). The stack member may be one of a group consisting of the first electrode sheet 210, the second electrode sheet 220, and the separator sheet 230, and specifically be the first electrode sheet 210, the second electrode sheet 220, or the separator sheet 230, which is arranged at the uppermost layer of the stack body 200.

In addition, the present disclosure may include an analysis unit 15 that determines the alignment of each stack member based on a boundary image of the stack body 200 collected by the imaging unit 14.

According to the embodiment of the present disclosure, the stacking inspection apparatus 1 includes the stack table 11.

The stack table 11 is a structural member supporting the electrode assembly 2, which is a measured target. The stack table 11 may have a flat structure capable of holding the stack body 200, which is formed by successively stacking stack members on the stack table 11 to gradually increase the thickness thereof in the stacking direction.

The electrode assembly 2 may be a generator of a stacked-type electrode assembly method, which includes the stack body 200 formed by stacking, in a direction, i.e., a stacking direction Z, one or more first electrode sheets 210, one or more second electrode sheets 220, and the separator sheet 230 inserted to insulate between the first electrode sheet and the second electrode sheet. The stack body 200 may be formed by stacking the separator sheet 230, the first electrode sheet 210, the separator sheet 230, and the second electrode sheet 220 in order. The first electrode sheet may act as an anode or a cathode, and may have a polarity different from that of the second electrode sheet.

In the embodiment of the present disclosure, the stack table 11 is configured to move vertically in the stacking direction of the stack body 200 to adjust the uppermost-layer height of the stack body 200 to the same height. Optionally, the stack table 11 may be coupled, at a lower portion, to a driving means (not shown) and be movable in response to driving of the driving means. The stack table 11 is designed to move downward as the stacking of the stack body 200 progresses, thereby adjusting the location where the stack member (i.e., one sheet-type stack member of the first electrode sheet 210, the second electrode sheet 220, and the separator sheet 230) arranged at the uppermost layer of the stack body 200 is stacked, at the same height. This maintains a constant distance D between the imaging unit 14, which will be described below, and the uppermost layer of the stack body 200. While a focus of the imaging unit 14 is maintained on the stack member arranged at the uppermost layer of the stack body 200 exposed through the exposure groove and the exposure hole of the first or second holder 12, 13, the side surface (or boundary) of the stack member may be captured to acquire a clean image, thereby improving the precision of the gap G between the reference line R and the stack member.

Moreover, the stack table 11 may be formed to have an area larger than an area of the stack body 200 and, in other words, than an area of the electrode assembly 2.

The present disclosure includes the first holder 12 capable of pressurizing a first surface region of the stack body 200 to secure the position of the sheet-type stack member.

The first holder 12 may be arranged at a first portion in a longitudinal direction Y of the stack body 200 to support an edge region of the stack body 200.

As shown in the drawings, the first holder 12 may include a first exposure groove 121 and a first exposure hole 122, which expose a boundary of the stack body 200 at the first surface of the stack body 200, and specifically, a boundary of the stack member at the uppermost layer of the stack body 200. The first exposure groove 121 is formed by extending from a boundary of the first holder 12 in the longitudinal direction Y, while the first exposure hole 122 may be formed in the first holder 12 and extend in the width direction X.

The boundary of the first electrode sheet 210, the second electrode sheet 220, and the separator sheet 230, which constitute the sheet-type stack member of the stack body 200, may be exposed through the first exposure groove 121 and the first exposure hole 122 formed in the first holder 12. The first exposure groove 121 may expose the first surface boundary located at a first portion in the longitudinal direction Y of the stack member, and the first exposure hole 122 may expose a third surface boundary or a fourth surface boundary located at a first portion in the width direction X of the stack member.

The first holder 12 may include a pair of first holders 12 arranged symmetrically in the width direction X in the first surface region of the stack body 200. One of the pair of first holders 12 may be arranged to expose, through the first exposure hole 122, the third surface boundary of the stack body 200 or the sheet-type stack member, while the other one of the pair of first holders 12 may be arranged to expose, through the first exposure groove 121, the fourth surface boundary of the stack body 200 or the sheet-type stack member.

Meanwhile, in the specification, as terms used to describe the orientation of the electrode assembly 2 or the stack body 200, the stacking direction, width direction, and longitudinal direction of the electrode assembly 2 or the stack body 200 are defined as arrows Z, X, and Y, as shown in FIG. 1. At this point, the stacking direction Z may indicate a direction in which the first electrode sheet, the second electrode sheet, and the separator sheet constituting the electrode assembly 2 are stacked on the stack table 11. The longitudinal direction Y may indicate a direction of arrangement of the first holder 12 and the second holder 13 that are arranged in parallel to each other or a direction of extension of the separator sheet 230. The width direction X may indicate a direction perpendicular to the longitudinal direction Y. Accordingly, the stacking direction Z, the width direction X, and the longitudinal direction Y are perpendicular to each other.

Furthermore, the first surface and the second surface are opposite edges (or boundaries) of each sheet-type stack member, the edges being arranged to face each other in the longitudinal direction Y perpendicular to the stacking direction Z, and the third surface and the fourth surface are opposite edges (or boundaries) of each sheet-type stack member, the edges being arranged to face each other in the width direction X.

Corresponding to the first holder, the present disclosure includes the second holder 13 capable of pressurizing the second surface region of the stack body 200 to secure the position of the sheet-type stack member.

The second holder 13 may be arranged at a second portion in the longitudinal direction Y of the stack body 200 to support an edge region of the stack body 200.

As shown in the drawings, the second holder 13 may include a second exposure groove 131 and a second exposure hole 132 to expose the boundary of the stack body 200 at the second surface of the stack body 200, more specifically, the boundary of the sheet-type stack member arranged at the uppermost layer of the stack body 200. The second exposure groove 131 is formed by extending from a boundary of the second holder 13 in the longitudinal direction Y, while the second exposure hole 132 may be formed in the second holder 13 and extend in the width direction X.

The boundary of the first electrode sheet 210, the second electrode sheet 220, and the separator sheet 230, which are a sheet-type stack member of the stack body 200, may be exposed through the second exposure groove 131 and the second exposure hole 132 formed in the second holder 13. The second exposure groove 131 may expose the second surface boundary located at a second portion in the longitudinal direction Y of the stack member, and the second exposure hole 132 may expose a third surface boundary or a fourth surface boundary located at a second portion in the width direction X of the stack member.

The second holder 13 may include a pair of second holders 13 arranged symmetrically in the width direction X in the second surface region of the stack body 200. One of the pair of second holders 13 may be arranged to expose, through the second exposure hole 132, the third surface boundary of the stack body 200 or the sheet-type stack member, while the other one of the pair of second holders 13 may be arranged to expose, through the second exposure groove 131, the fourth surface boundary of the stack body 200 or the sheet-type stack member.

The present disclosure includes the imaging unit 14 arranged to be spaced apart from the stack table 11 at a predetermined distance.

The imaging unit 14 is configured to capture the edge regions of the stack body 200, which is supported by the first and second holders 12 and 13. Preferably, the imaging unit 14 may capture images of side surface boundaries of the sheet-type stack member of the stack body 200, which are exposed through each exposure groove 121, 131 and each exposure hole 122, 132. As shown in FIG. 1, the imaging unit 14 may be provided at either side portion in the longitudinal direction Y of the stack body 200.

The present disclosure is configured to capture the images of the exposure groove 121, 131 and the exposure hole 122, 132 at each stacking of the first electrode sheet, the second electrode sheet, and the separator sheet to check the alignment of the first electrode sheet 210, the second electrode sheet 220, and the separator sheet 230 stacked on each layer.

Specifically, the present disclosure includes the reference line R formed along the outer circumference of the stack body 200.

The present disclosure may provide the reference line R serving as a reference for detecting a location where the stack member is stacked on the stack table 11. In other words, according to the present disclosure, the preset reference line R is used to determine the stacking fault of the electrode assembly via the gap G between the reference line R and the side surface boundary of each stack member.

Optionally, according to the present disclosure, the reference line R can be provided by emitting the laser vertically with respect to the stack table 11, in other words, from a laser generator 16 in the stacking direction Z. In the specification, the above-described laser generator is already known, so a detailed description thereof will be omitted.

The reference line R may be formed by a laser beam directed toward the stack table 11 in a rectangular shape, but it is not limited thereto, and may not be limited thereto and may be formed in a shape corresponding to the stack body 200.

For example, the reference line R may include a first reference line R1 arranged to be spaced outward from the first surface of each stack member, a second reference line R2 arranged to be spaced outward from the second surface of each stack member, a third reference line R3 arranged to be spaced outward from the third surface of each stack member, and a fourth reference line R4 arranged to be spaced outward from the fourth surface of the stack member.

Each reference line R (R1, R2, R3, R4) may be formed between the edge of the stack table 11 and the outer surface of the stack body 200 (or electrode assembly) seated on the stack table 11. This eventually allows the stack body 200 to be arranged in the inner region surrounded by the first to fourth reference lines R1 to R4.

The present disclosure is configured to provide the reference line R using a laser beam. The reference line R may be formed of a planar laser light sheet directed in the stacking direction Z toward the stack table 11. Therefore, the present disclosure may be configured to visualize the reference line R using a laser light sheet emitted in the stacking direction Z along the outer circumference of the stack body 200.

Specifically, the present disclosure may be configured to emit the reference line R, which is visualized as a laser light sheet, so as to arrange the reference line R in parallel to each side surface of the stack body 200. Eventually, it is possible to minimize image distortion caused by the thickness increase of the stack body as the stack member is stacked.

Furthermore, as shown in FIG. 1, a measurement jig 20 capable of determining the reference line may be arranged in each corner region of the stack table 11. The measurement jig 20 is coupled to the stack table 11 while being physically separated from the stack table 11, which allows the reference line to be provided through an intersection point 20a at a fixed position without the issue of movement of the stack table.

The alignment of the stack body may be inspected and checked based on a distance and a location relation from the boundary of the stack body with reference to the intersection point 20a at a central portion of the plane of the measurement jig 20.

Furthermore, as shown in FIG. 3b, considering the position and range where the imaging unit captures the stack body, as a line serving as the reference line is marked on a display screen 14a of the imaging unit 14, the alignment inspection of the stack body can be performed by capturing a gap between the reference line of the display screen 14a of the imaging unit 14 and the boundary of the actually captured image of the stack body. In this case, the position and shape of the reference line marked on the display screen 14a of the imaging unit 14 may be properly adjusted or controlled in response to the distance or range in which the imaging unit 14 captures the stack body, thereby displaying it on the display screen 14a.

In addition, the present disclosure includes the analysis unit 15 that analyzes the alignment of the first electrode sheet 210, the second electrode sheet 220, and the separator sheet 230 that are stacked, based on images captured by the imaging unit 14.

The imaging unit 14 may be installed in the same direction as the plane of the laser light sheet, i.e., in the stacking direction, thereby acquiring the reference line R as a linear image (indicated with an alternated long and short dash line), as shown in FIG. 3a.

The analysis unit 15 may calculate the gap G between each side surface of the first electrode sheet 210, the second electrode sheet 220, or the separator sheet 230 constituting the stack member and each parallel reference line R1, R2, R3, R4, by the image, captured by the imaging unit 14, and obtained by capturing the alignment of the side surface boundary of the stack member located at the first and second holders 12 and 13 and the reference line R (R1, R2, R3, and R4).

Furthermore, the analysis unit 15 compares a gap range between the first electrode sheet, the second electrode sheet, or the separator sheet and the reference line, thereby checking the alignment of the first electrode sheet, the second electrode sheet, or the separator sheet.

The present disclosure may include a lighting unit (not shown) that emits light onto the stack table 11 to enable the imaging unit 14 to obtain a clear image.

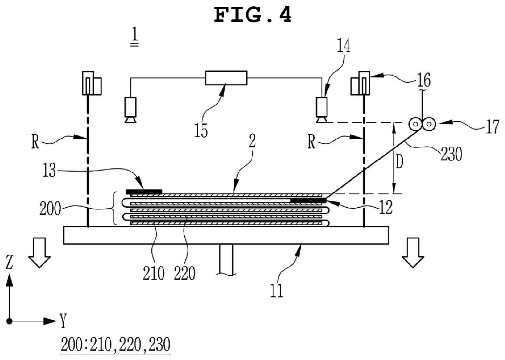

According to another embodiment of the present disclosure, the stacking inspection apparatus 1 for a secondary battery may be used during the stacking process of different types of electrode assemblies 2, as shown in FIG. 4. This is an expanded embodiment that includes the stacking inspection apparatus shown in FIG. 1. Since this embodiment is similar to the aforementioned embodiment, except for the method of supplying the separator, descriptions of similar or identical configurations are omitted here to facilitate a clear understanding of the present disclosure.

FIG. 4 is a front view schematically showing the electrode stacking inspection apparatus for secondary batteries according to another embodiment of the present disclosure.

As shown in FIG. 4, the stack body 200 forming the Z-folded type electrode assembly 2 is stacked in a shape in which the first electrode sheet 210 or the second electrode sheet 220 is inserted between layers of the separator sheet 230 folded in a zigzag shape in the stacking direction Z, on the stack table 11.

According to another embodiment of the present disclosure, the stacking inspection apparatus 1 may be configured to provide and stack the first electrode sheet 210 and the second electrode sheet 220 successively from both sides, as centering the separator sheet 230 folded in a zigzag shape by the reciprocating motion of the stacking roll 17.

The stacking roll 17 may include a pair of rolls capable of the reciprocating motion, and the separator sheet 230 supplied from above may be folded in a zigzag shape by the reciprocating motion of the stacking roll 17.

Moreover, the present disclosure is designed to move downward as the stack body 200 is stacked on an upper surface of the stack table 11, so that the position of stacking the first electrode sheet 210, the second electrode sheet 220, or the separator sheet 230 to be arranged on the uppermost layer of the stack body 200 may be maintained at the same height.

Specifically, as shown in FIGS. 2 and 4, the present disclosure can be advantageously used for various types of electrode assemblies that provide a predetermined thickness in the stacking direction by alternately stacking the electrode sheet and the separator sheet.

Furthermore, the present disclosure may provide the reference line R at the same height (or level) of the stack member arranged at the uppermost layer, without providing the reference line formed in advance on the edge of the stack table or the stack table. As a result, the position of the reference line does not change due to the length extension of the separator sheet and the increased thickness of the stack body, and a distance can be precisely measured, which is an advantage.

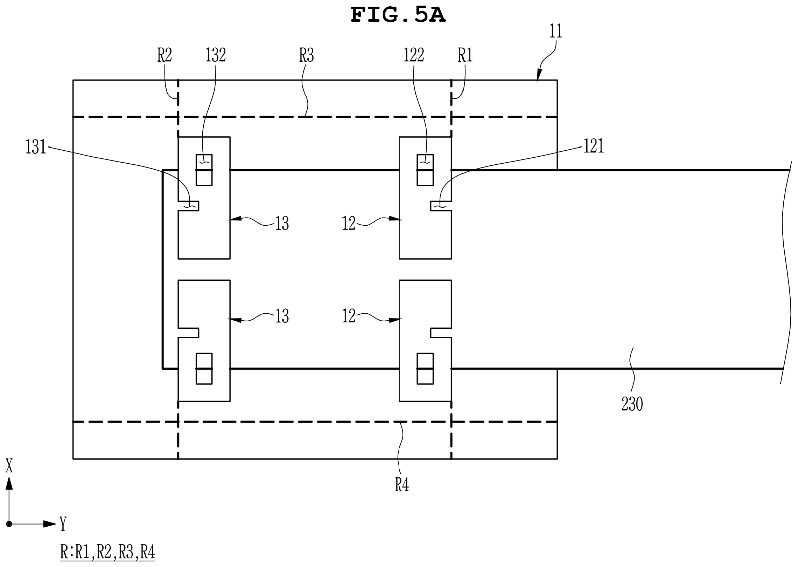

Hereinbelow, referring to FIGS. 5a to 5d, a method for inspecting stacked secondary batteries using a reference line will be described. Herein, according to the present disclosure, based on the Z-folded electrode assembly shown in FIG. 4, the method for inspecting the alignment of the stack member during the stacking process will be described.

Referring to FIGS. 1 to 5d, according to the present disclosure, when the stack body 200 is stacked by interposing the separator sheet 230 between one or more first electrode sheets 210 and one or more second electrode sheets 220, the alignment of each electrode sheet or the separator sheet constituting the stack body can be inspected each time of stacking the sheet-type stack member.

First, the method according to the present disclosure includes setting S100 of the reference line S100 serving as the alignment reference of the sheet-type stack member, which is one of the first electrode sheet 210, the second electrode sheet 220, or the separator sheet 230 constituting the stack body 200.

The setting S100 of the reference line S100 includes setting S100 of the reference line R (R1, R2, R3, and R4) on the stack table 11 on which the stack body 200 forming the electrode assembly is seated.

The reference line R is formed in a shape corresponding to the stack body 200, and the reference line R may include: the first reference line R1 arranged to be spaced outward from the first surface located at a first portion in the longitudinal direction Y of each stack member, the second reference line R2 arranged to be spaced outward from the second surface located at a second portion in the longitudinal direction Y of the stack member, the third reference line R3 arranged to be spaced outward from the third surface located at a first portion in the width direction X of the stack member, and the fourth reference line R4 arranged to be spaced outward from the fourth surface located at a second portion in the width direction X of the stack member.

Optionally, as shown in FIG. 1, the method of the present disclosure may be configured to visualize the reference line R by a laser light sheet that is emitted in the stacking direction Z from the laser generator 16 toward the stack table 11.

Furthermore, the setting of the reference line may be provided through the reference point of the measurement jig fixed to be spaced apart from the stack table.

In other words, as shown in FIG. 1, a measurement jig capable of determining the reference line may be arranged in each corner region of the stack table. As the measurement jig is securely coupled to the stack table while being physically separated from the stack table, the measurement jig may indicate the reference point of the reference line at the position secured without an issue of movement of the stack table.

Based on the intersection point on the plane of the measurement jig as shown in the drawing, the alignment of the stack body can be inspected and checked based on a distance and positional relationship with respect to the boundary of the stack body.

Furthermore, in the capturing process performed to acquire images of the side surface boundary of the stack member and the reference line exposed through the exposure grooves and the exposure holes, which will be described below, the setting of the reference line may be achieved by displaying it in advance on the display during image capturing.

In other words, as shown in FIG. 3b, a line serving as the reference line is indicated on the display of the imaging unit, considering the location and range in which the imaging unit captures the stack body. Accordingly, the alignment inspection of the stack body can be performed by capturing a gap between the reference line indicated on the display of the imaging unit and the boundary of the stack body image actually captured. In this case, the position and shape of the reference line shown on the display of the imaging unit may be properly adjusted or controlled with respect to the distance or range at which the imaging unit captures the stack body.

Thereafter, the method according to the present disclosure includes stacking S200 the stack member on the stack table 11.

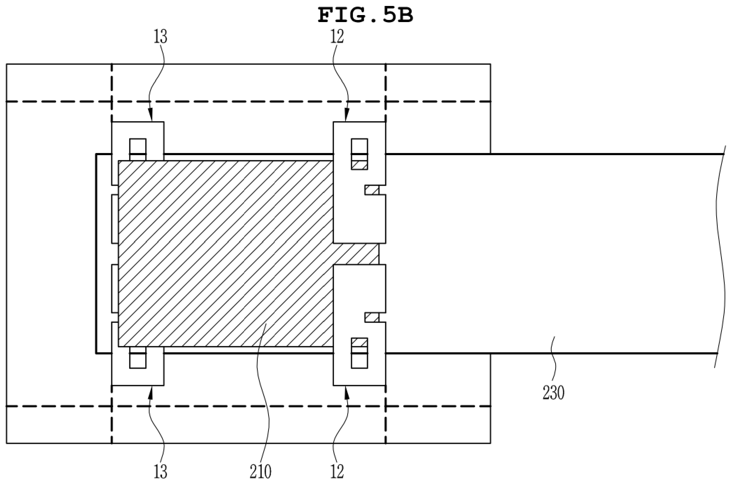

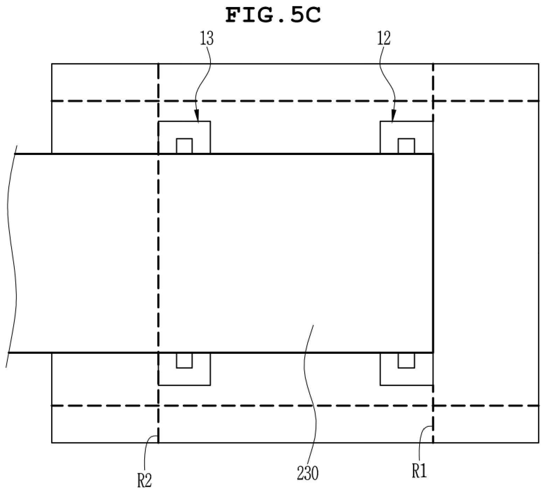

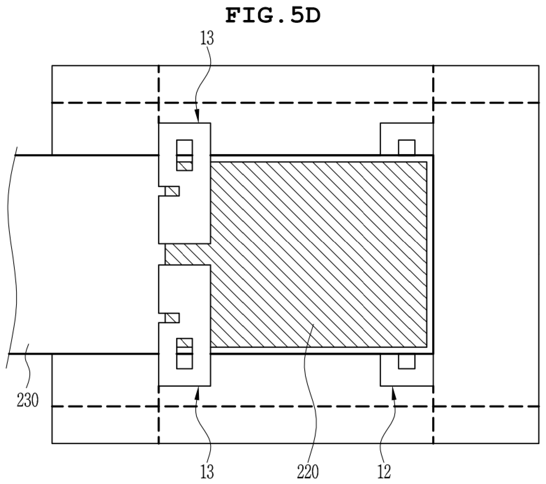

In the stacking S200 to be described below, the stack body 200 may be formed by successively stacking the sheet-type stack member, but is not limited thereto. For example, the stack body 200 may be formed such that the separator sheet 230 may be stacked on the stack table 11 by extending from a first portion to a second portion in the longitudinal direction Y (referring to FIG. 5a), the first electrode sheet 210 may be stacked on the separator sheet 230 (referring to FIG. 5b), the separator sheet 230 may be stacked by extending from the second portion to the first portion in the longitudinal direction Y to be folded reversely (referring to FIG. 5c), the second electrode sheet 220 may be stacked on the separator sheet 230 (referring to FIG. 5d), and then the separator sheet 230 may be stacked to cover the second electrode sheet 220 (referring to FIG. 5a). The above-described stacking process of the stack body 200 may be repeated to form the electrode assembly 2 having a predetermined thickness in the stacking direction.

As described above, the method according to the present disclosure includes pressurizing and supporting S300 of the side surface region of the stack member arranged at the uppermost layer at each stacking of the stack member.

The side surface region of the stack member arranged at the uppermost layer is supported by the first holder 12 and/or the second holder 13, thereby minimizing the gap between the stack members to prevent a blurred portion in the captured image and to ensure the alignment of the stack member.

Moreover, according to the present disclosure, the first holder 12 and the second holder 13 are arranged at the longitudinally opposite ends of the stack member arranged at the uppermost layer and are aligned with the first reference line R1 and the second reference line R2.

The holders 12 and 13 have the first exposure groove 121 and the second exposure groove 131 extending in the longitudinal direction Y, and the first exposure hole 122 and the second exposure hole 132 extending in the width direction X. The boundary (edge) of the stack member may be exposed through the exposure grooves and the exposure holes.

In other words, the first and second exposure grooves 121 and 131 may be formed at the boundary regions of the holders, and may be formed to be open in the longitudinal direction Y from the boundary regions of the holders 12 and 13 to the inner regions. Accordingly, the first holder 12 may have an opening of the first exposure groove 121 formed to match the first surface boundary of the stack member, and the second holder 13 may have an opening of the second exposure groove 131 formed to match the second surface boundary of the stack member.

In addition, as described above, the first holder 12 includes a pair of first holders 12 arranged symmetrically in the width direction X so that the third surface boundary and the fourth surface boundary of the stack member may be exposed through the first exposure holes 122.

In response to this, the second holder 13 may include a pair of second holders 13 arranged symmetrically in the width direction X so that the third surface boundary and the fourth surface boundary of the stack member may be exposed through the second exposure grooves 132.

According to the present disclosure, the holders 12 and 13 pressurize and support the first surface region and the second surface region, respectively, at each stacking of the stack member. In order to fully support a new stack member to be stacked on the stack body and the stack body already stacked, the first holder 12 and the second holder 13 may be arranged at different heights as shown in FIGS 2 and 4. For example, the first holder 12 may be arranged in the first surface region of the first electrode sheet 210, and the second holder 13 may be disposed between the second surface region of the separator sheet 230 and the second surface region of the first electrode sheet 210 (referring to FIG. 5b). Otherwise, the second holder 13 may be arranged in the second surface region of the second electrode sheet 220, and the first holder 12 may be interposed between the first surface region of the separator sheet 230 and the first surface region of the second electrode sheet 220 (referring to FIG. 5d).

The method according to the present disclosure includes capturing S400 of the reference line with a side surface boundary of the stack member stacked on the stack table 11.

Preferably, the capturing S400 of an image may be performed by capturing, by the imaging unit 14, the side surface boundary of the uppermost-layered stack member exposed through the exposure grooves and the exposure holes, and the reference line arranged adjacent to the side surface boundary at the same time, thereby acquiring the image.

The capturing S400 of an image is performed by using the imaging unit 14 arranged to be spaced apart from the stack table 11 in the stacking direction, and may be formed with the first and/or second holder 12, 13 supporting the stack body.

In the capturing S400 of an image, both longitudinal side surfaces and both widthwise side surfaces of the uppermost-layer stack member exposed through each exposure groove 121, 131 and each exposure hole 122, 132 may be captured, and a gap G (GX11, GX12, GX21, GX22, GY11, GY12, GY21, GY22) between the reference line R (R1, R2, R3, R4) and each side surface boundary of the stack member can be checked from the captured images. Optionally, according to the present disclosure, a gap between stack members can be checked based on the size of one or more stack members stacked in the stacking direction.

Herein, since the display and settings of the reference line have already been described above, a detailed description will be omitted.

The method according to the present disclosure includes determining S500 of the alignment of the stack member constituting the stack body 200 on the basis of the captured images.

In the determining S500 of the alignment, as described above, a gap G between the edge of each stack member and the reference line spaced outwardly from the edge may be measured based on the capturing S400, and whether poor stacking of the stack member occurs may be determined based on the gap G.

Specifically, the determining S500 of the alignment may be performed by measuring a gap GY11, GY12 between the first surface of the stack member arranged at the uppermost layer of the stack body 2 and the first reference line R1, a gap GY21, GY22 between the second surface and the second reference line R2, a gap GX11, GX21 between the third surface and the third reference line R3, and a gap GX12, GX22 between the fourth surface and the fourth reference line R4.

The above-calculated gaps G may be used to determine whether the respective gaps fall within a preset gap range, and when at least one of the gaps is outside the preset gap range, the stack member may be determined to be poorly stacked.

The determining S500 of the alignment is performed by recognizing that the first surface boundary of the separator sheet 230, which is one of the stack members, and the opening of the first exposure groove 121 of the first holder 12 match each other. On the contrary to this, it is recognized that the second surface boundary of the separator sheet 230, which is one of the stack members, and the opening of the second exposure groove 131 of the second holder 13 match each other.

Furthermore, according to the present disclosure, the third surface boundary and the fourth surface boundary of the stack member are exposed through the first exposure hole 122 of the first holder 12. When the boundary of the stack member is not recognized from the first exposure hole 122, it is determined that the stacking of the stack member pressurized and supported by the first holder is poor.

In addition, according to the present disclosure, the third surface boundary and the fourth surface boundary of the stack member are exposed through the second exposure hole 132 of the second holder 13. When the boundary of the stack member is not recognized from the second exposure hole 132, it is determined that the stacking of the stack member pressurized and supported by the first holder is poor.

As is well known to those skilled in the art, the present disclosure is configured to stop the stacking of the electrode assembly when it is determined that poor stacking of the stack member occurs in the determining of the alignment.

In the present disclosure, to form the electrode assembly having a predetermined thickness in the stacking direction Z, the stacking S200 to the determining S500 may be repeatedly performed. As described above, according to the present disclosure, it is possible to perform all inspections for the alignment of the stack member each time the stack member is stacked in the stacking direction, so that the alignment and manufacturing precision of the stack member can be improved during the manufacturing of the electrode assembly.

Hereinabove, the present disclosure has been described in detail through specific embodiments. The embodiments are provided to specifically describe the present disclosure, but the present disclosure is not limited thereto. Within the technical spirit of the present disclosure, it will be apparent that various modifications or changes are possible by those skilled in the art.

All mere modifications, equivalents, or alternatives of the present disclosure fall within the scope of the present disclosure, and the specific scope of protection of the present disclosure will be clearly defined by the appended claims.

### [Description of reference numerals]

| | | | |
|---|---|---|---|
| 1: | stacking inspection ap paratus | | |
| 11: | stack table | | |
| 12: | first holder | 13: | second holder |
| 14: | imaging unit | 14a: | display screen |
| 15: | analysis unit | | |
| 16: | laser generator | 17: | stacking roll |
| 20: | measurement jig | 20a: | intersection point |
| R,R1,R2,R3,R4: | reference line | 2: | electrode assembly |
| 200: | stack body | 210: | first electrode sheet |
| 220: | second electrode sheet | 230: | separator sheet |

## Claims

1. A stacking inspection apparatus for secondary batteries, the stacking inspection apparatus comprising:
a stack table holding a stack body thereon, the stack body including a sheet-type stack member that is one of a first electrode sheet, a second electrode sheet, or a separator sheet;
a first holder arranged in line along a first surface of the stack body;
a second holder arranged in line along a second surface of the stack body, the second surface opposing the first surface;
a reference line provided along an outer circumference of the stack body; and
an imaging unit acquiring an image of a side surface boundary of the stack body, which is exposed through the first holder and the second holder, and the reference line.

2. The stacking inspection apparatus of claim 1, wherein the stack table is configured to move vertically in a stacking direction of the stack body.

3. The stacking inspection apparatus of claim 1, wherein the stack member arranged on the uppermost layer of the stack body maintains a uniform distance from the imaging unit.

4. The stacking inspection apparatus of claim 1, wherein the reference line is provided by visualizing a laser emitted by a laser generator.

5. The stacking inspection apparatus of claim 1, wherein the reference line is formed by a planar laser light sheet oriented in the stacking direction toward the stack table.

6. The stacking inspection apparatus of claim 1, wherein the reference line is formed from intersection points of measurement jigs that are secured to be spaced apart from the stack table.

7. The stacking inspection apparatus of claim 1, wherein the reference line is formed to be displayed on a display screen of the imaging unit.

8. The stacking inspection apparatus of claim 1, wherein the first holder comprises a pair of first holders arranged symmetrically in a width direction of the stack body, and each first holder has a first exposure groove extending longitudinally from the boundary of the first holder and a first exposure hole extending in the width direction in the first holder, and
the second holder comprises a pair of second holders arranged symmetrically in the width direction of the stack body, and each second holder has a second exposure groove extending longitudinally from the boundary of the second holder and a second exposure hole extending in the width direction in the second holder.

9. The stacking inspection apparatus of claim 1, wherein the separator sheet of the stack member is folded in a zigzag shape due to a reciprocating motion of a stacking roll.

10. A stacking inspection method of secondary batteries, the method comprising:
setting a reference line serving as an alignment reference of a sheet-type stack member that is one of a first electrode sheet, a second electrode sheet, or a separator sheet that constitute a stack body;
stacking the stack member on a stack table;
pressurizing and supporting a side surface boundary of the stack member arranged at the uppermost layer of the stack body in a stacking direction by a holder, which includes an exposure groove and an exposure hole exposing the side surface boundary of the stack member;
capturing an image of the side surface boundary of the stack member, which is exposed through the exposure groove and the exposure hole, and the reference line; and
determining alignment of the stack member from the captured image.

11. The stacking inspection method of claim 10, wherein the stack table moves downward in the opposite direction to the stacking direction at each stacking of the stack member.

12. The stacking inspection method of claim 10, wherein the reference line is provided along an outer circumference of the stack body.

13. The stacking inspection method of claim 10, wherein the setting of a reference line is provided by reference points of measurement jigs secured to be spaced apart from the stack table.

14. The stacking inspection method of claim 10, wherein the setting of a reference line is formed to be displayed on a display screen in advance during the capturing, in the capturing of an image of the side surface boundary of the stack member, which is exposed through the exposure groove and the exposure hole, and the reference line.

15. The stacking inspection method of claim 10, wherein in the pressurizing and supporting of a side surface boundary, the holder includes a first holder that is arranged in line along a first surface of the stack body, and a second holder arranged in line along a second surface opposite to the first surface of the stack body.

16. The stacking inspection method of claim 15, wherein the first holder comprises a pair of first holders arranged symmetrically in a width direction of the stack body, and each first holder has a first exposure groove extending longitudinally from the boundary of the first holder and a first exposure hole extending in the width direction in the first holder, and
the second holder comprises a pair of second holders arranged symmetrically in the width direction of the stack body, and each second holder has a second exposure groove extending longitudinally from the boundary of the second holder and a second exposure hole extending in the width direction in the second holder.

17. The stacking inspection method of claim 10, wherein the capturing of an image is performed by capturing a side surface boundary of the stack member arranged at the uppermost layer of the stack body.

18. The stacking inspection method of claim 10, wherein in the determining of the alignment, a gap between the side surface boundary of the stack member, which is exposed through the exposure groove and the exposure hole, and the reference line is used to determine whether the poor stacking of the stack member occurs.

19. The stacking inspection method of claim 10, wherein the stacking of a stack member, the pressurizing and supporting of a side surface boundary, the capturing of an image, and the determining are repeated in order.
